# EUROPEAN PATENT APPLICATION

(11) **EP 4 541 481 A1**
(43) Date of publication of application: **23.04.2025**
(21) Application number: 23822881.1
(22) Date of filing: 19.05.2023
(51) Int. Cl.: B21D 35/00, B21D 37/10, B21D 53/88

(54) **MOLD CAPABLE OF PROCESSING FRONT FLOORS HAVING DIFFERENT WHEELBASES**

(30) Priority: 17.06.2022 CN 202210690159
(71) Applicant: Zhejiang Geely Holding Group Co., Ltd., Hangzhou, Zhejiang 310051 (CN); Zhejiang Liankong Technologies Co., Ltd, Ningbo, Zhejiang 315336 (CN)
(72) Inventor: XU, Tianyu, Hangzhou, Zhejiang 310051 (CN); LI, Tianqi, Hangzhou, Zhejiang 310051 (CN)
(74) Representative: Zaboliene, Reda
(86) International application number: PCT/CN2023/095405
(87) International publication number: WO 2023/241311

(57) **Abstract**

A mold capable of processing front floors (1) having different wheelbases, comprising a head male die (3) and a tail male die (4), the head male die and the tail male die being respectively used for manufacturing the front portion and rear portion of a front floor by means of an opening and drawing process in a step distance direction. The mold further comprises a wheelbase length change area (1a) configured to be adapted to a length change of the front floor, the wheelbase length change area being used for manufacturing the front floor having same-shaped cross portions in the step distance direction. According to the mold capable of processing front floors having different wheelbases, conformal areas of the rear portions of the front floors are manufactured by using the opening and drawing process, so that molds for the parts of the front floors having different total wheelbases but the same conformal area cross portion are shared, while product quality is ensured and raw materials are not wasted. The front floors can also be produced by means of a double-cavity process or a process for producing two pieces by using one mold, so that the mold investment, the material costs, the production costs, and the development cycle are all optimized.

## Description

The present document claims priority to Chinese present application No. 202210690159.5, filed on 17 June 2022, applied by Zhejiang Geely Holding Group CO., Ltd., and ZHEJIANG LIANKONG TECHNOLOGIES CO., LTD., and entitled "A mold capable of processing front floors having different wheelbases". The entire disclosure of the above-identified application is incorporated herein by reference.

### TECHNICAL FIELD

The present document relates to the technical field of automotive front floor architecture development, and in particular to a mold capable of processing front floors having different wheelbases.

### DESCRIPTION OF RELATED ART

At present, the competition in the automobile market is becoming increasingly fierce, and automobile manufacturers need to accelerate the product renewal cycle under the premise of cost control to ensure the competitiveness of the market. As a result, modularization and architectural vehicle building have become the trend. Commonly development work of making the same architecture to carry different models such as high, low, and crossover tends to set a wheelbase variation area of the front floor at the rear portion of the front floor, and the change of the wheelbase of different models such as high, low, and crossover is generally tolerated through the rear portion of the front floor of the architecture, and this is mainly realized by designing different lengths of front floors, longitudinal beams, door sills, and the inner plates thereof.

### TECHNICAL ISSUES

Under the concept of architectural manufacturing a vehicle, it is not only necessary to achieve the sharing of parts and molds for the cabin and the rear floor, but also the sharing of the molds for the area where the wheelbase of the front floor varies, in order to reduce the development work of the parts and their tooling, and to lower the development cycle and investment costs. For the current conventional development mode of parts and their molds, the development of three models usually requires the development of three front floor parts and their corresponding molds, and requires a total of nine to twelve sets of molds, even if one of the processes can be achieved in the common use of the molds, it will cost ten million level of raw materials, which defeats the purpose of common use of the molds.

### TECHNICAL SOLUTION

In view of this, the present document provides a mold capable of processing front floors having different wheelbases that optimizes production costs and development cycles.

The mold provided by the present document capable of processing front floors having different wheelbases includes a head convex mold and a tail convex mold, the head convex mold and the tail convex mold are used to process front and rear portions of a front floor in a step direction by an open-drawing process, respectively, and the mold further includes a wheelbase variation area for adapting to a wheelbase change of the front floor, the wheelbase variation area is configured for producing the front floor having same cross-sections at any positions in the step direction.

Furthermore, the mold capable of processing front floors having different wheelbases further includes a plurality of locking ribs for closed-drawing, the locking ribs are provided on both sides of the mold capable of processing front floors having different wheelbases in the step direction.

Furthermore, the mold capable of processing front floors having different wheelbases further includes a crimping ring for controlling the inflow of material, initial positions of blanks on left and right sides of the front floor are located on the crimping ring.

Furthermore, an initial position of the blank for the front portion of the front floor is located on the head convex mold and an initial position of the blank for the rear portion of the front floor is located on the tail convex mold.

Furthermore, the mold includes a reinforcement forming portion, the reinforcement forming portion is provided on the tail convex mold, the reinforcement forming portion is used to process a rear reinforcement at the rear portion of the front floor hat is successively arranged in a roll width direction.

Furthermore, the reinforcement forming portion includes a reinforcement convex mold and a reinforcement concave mold that are adjacent and alternately arranged, the reinforcement convex mold and the reinforcement concave mold are used to make convex and concave reinforcements of the rear reinforcement, the convex reinforcement and the concave reinforcement are connected through a curved surface.

Furthermore, the mold includes a first mold cavity and a second mold cavity, the first mold cavity and the second mold cavity sharing common upper and lower bases, the first mold cavity and the second mold cavity are respectively provided with a first convex mold and a second convex mold separated from each other for producing the front floor, the first mold cavity and the second mold cavity are used to produce two pieces of the front floor respectively using two rolls of blanks.

Furthermore, the mold includes a third convex mold, the third convex mold includes a first convex mold and a second convex mold integrated into one piece for producing the front floor, the third convex mold is used for producing two pieces of the front floors using a single roll of blank.

Furthermore, an outer side of the locking rib is provided with a positioning plate located on the crimping ring, the positioning plate is able to move in the step direction along the extension direction of the locking rib and is fixed to the crimping ring when it moves to an arbitrary position, an edge of the blank is positioned within the wheelbase variation area, the front floor includes a first front floor with a first predetermined length of wheelbase, a second front floor with a second predetermined length of wheelbase, and a third front floor with a third predetermined length of wheelbase, the positioning plate is positioned in different positions along the step direction when producing the front floors of different wheelbases.

Furthermore, the first predetermined length is greater than the third predetermined length and the second predetermined length, the third predetermined length is greater than the second predetermined length, and the length of the conformal area of the first front floor is greater than the length of the conformal area of the third front floor and the length of the conformal area of the second front floor.

### BENEFICIAL EFFECT

The mold of the present document, which is capable of processing front floors having different wheelbases, uses the open-drawing process to make the conformal area at the rear portion of the front floor while ensuring product quality and not wasting the raw materials, so as to achieve the common use of the molds for the parts of the front floors which have different wheelbases but the same cross-section of the conformal areas. The present document is also capable of producing the front floor by a dual-cavity process or a one-mold-two-piece process, which optimizes the mold investment, the material cost, the production cost and the development cycle, with excellent economic benefits.

### BRIEF DESCRIPTION OF THE DRAWINGS

FIG. 1 shows a schematic diagram of a mold provided by the present document capable of processing front floors having different wheelbases.
FIG. 2 shows a schematic view of the front floor of the present document.
FIG. 3 shows a sectional view of a rear reinforcement taken along line A-A of the present document.
FIG. 4 shows a schematic view of a first convex mold and a second convex mold of the present document.
FIG. 5 shows a schematic view of a third convex mold of the present document.

### DETAILED DESCRIPTION OF THE EMBODIMENTS

Specific embodiments of the present document are described in further detail below in conjunction with the accompanying drawings and embodiments. The following embodiments are used to illustrate the present document, but are not intended to limit the scope of the present document.

The terms "first", "second", "third", "fourth", etc. in the specification and claims of the present document are used to distinguish similar objects and need not be used to describe a particular order or sequence.

It should be noted that the specification and the claims of the present document refer to the terms "step direction" and "roll width direction", which are common concepts in the field, wherein the step direction refers to the direction in which the blank is rolled out when the process is executed and the length direction of the blank, which is also the length direction of the front floor 1; and the roll width direction refers to the width direction of the blank when the process is executed, which is also the width direction of the front floor 1.

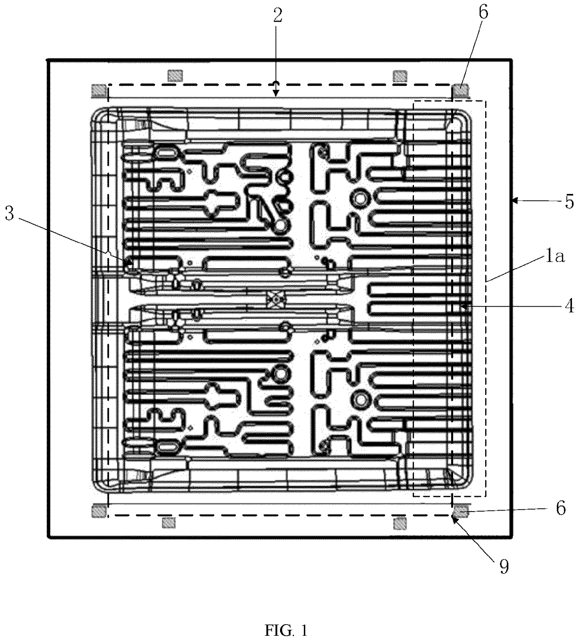

Referring to FIG. 1, the mold capable of processing front floors with different wheelbases of the present document, hereinafter referred to as the mold, includes a head convex mold 3 and a tail convex mold 4 for open-drawing and a plurality of locking ribs 2 for closed-drawing, the head convex mold 3 and the tail convex mold 4 are used to process the front and the rear portions of the front floor 1 by open-drawing in the step direction, respectively, and the locking ribs 2 are used to process the left and the right sides of the front floor 1 by closed-drawing in the step direction.

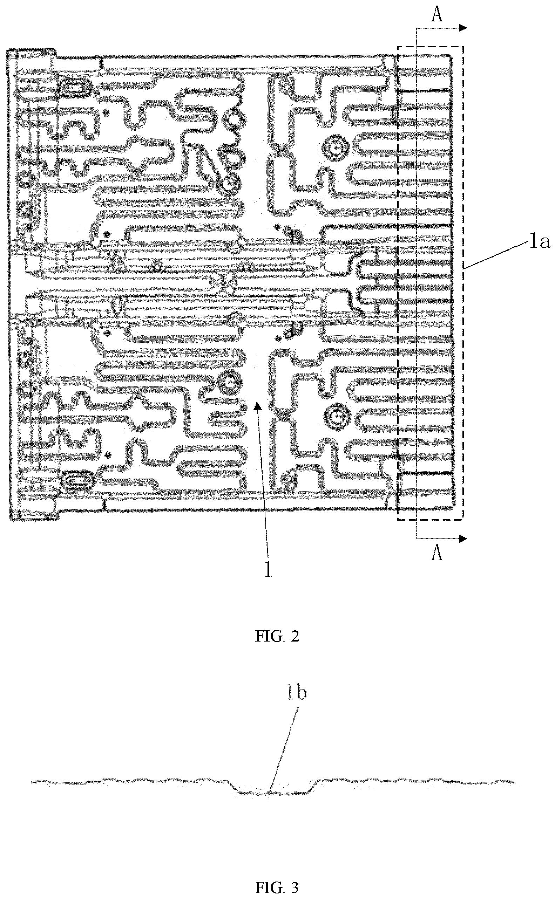

Referring to FIG. 2 together, specifically, the mold of the present document is used to process the front floor 1 of a vehicle model with different wheelbases, and in order to achieve the processing of the front floor 1 of the vehicle model with different wheelbases, it is necessary to design the front floor 1 with a conformal area for adapting to the variation of the wheelbase of the front floor 1, and accordingly, it is necessary to provide a wheelbase variation area 1a in the mold for processing this conformal area. For the front floors 1 of different wheelbase models, the cross-sectional shapes of the conformal areas are identical, and the design of the areas besides the conformal area may be identical, so as to achieve the purpose of common mold production. It is easily understandable that the conformal area is provided at the rear portion of the front floor 1. On one hand, there is usually no need for a complex structure to be provided in this area of the front floor 1, and on the other hand, the rear portion of the front floor 1 is easy to use the open-drawing process in the production. Since the rear portion of the front floor 1 of the present document has the same shape of the cross-section when it is cut by a plane parallel to the roll width direction at any position in the step direction, it is possible to use the mold of the present document to produce a variety of front floors 1 in which the wheelbase differences are less than or equal to the length of the conformal area. In order to avoid insufficient plastic deformation and the risk of wrinkles resulting from the open-drawing process, the left and the right sides of the front floor 1 are made by a closed-drawing process. The locking ribs 2 provided on both sides of the mold can control the inflow of material to ensure that the material is sufficiently plastically deformed during the molding process, so that the rigidity of the part is not affected by the open-drawing process. In this embodiment, the initial position of the blank for the front portion of the front floor 1 is located on the head convex mold 3, the initial position of the blank for the conformal area is located on the tail convex mold 4, and the initial positions of the blank for the left and right sides of the front floor 1 are located on a crimping ring 5.

Furthermore, the mold of the present document further includes the crimping ring 5 and a plurality of positioning plates 6, the crimping ring 5 is used for controlling the material inflow, the positioning plates 6 are provided on the crimping ring 5 in the roll width direction and on outer sides of the locking ribs 2, a blank line 9 is located on an inner side of the positioning plate 6, the positioning plate 6 is capable of moving in the step direction along the extension direction of the locking rib 2 and is fixed with respect to the crimping ring 5 when it moves to an arbitrary position, to fix a blank edge within the wheelbase variation area 1a. Specifically, by adjusting the unwind step, it is possible to adjust the length of the blanks used for the front floor 1. By fixing the positioning plate 6 in specified positions, it is possible to position blanks of different lengths on the mold, so as to produce the front floor 1 of different wheelbases on the same set of molds without wasting material.

Referring together to FIG. 3, furthermore, the mold in the present document includes a reinforcement forming portion, the reinforcement forming portion is provided on the tail convex mold 4, the reinforcement forming portion is used to produce a rear reinforcement 1b at the rear portion of the front floor 1 that is successively arranged in a roll width direction, the rear reinforcement 1b is provided on the tail convex mold 4 and extends from the tail convex mold 4 to a rear edge of the mold, the rear reinforcement 1b is successively arranged in the roll width direction, and a length of the rear reinforcement 1b in the step direction is greater than a length of the conformal area in the step direction, such that the ends of the rear reinforcement 1b extend out of the conformal area. Specifically, in one embodiment of the present document, the reinforcement forming portion includes a reinforcement convex mold and a reinforcement concave mold that are adjacent and alternately arranged, the reinforcement convex mold and the reinforcement concave mold are used to make convex and concave reinforcements of the rear reinforcement 1b, the convex reinforcement and the concave reinforcement are connected through curved surfaces. The convex reinforcement is formed by stamping from a first surface (e.g. a lower surface) to a second surface (e.g. an upper surface) of the front floor 1, the concave reinforcement is formed by stamping from a second surface to a first surface of the front floor 1, the convex reinforcement and the concave reinforcement are connected through the curved surfaces, a concave reinforcement with greater size is provided in the middle part of the rear portion of the front floor 1, a plurality of convex and concave reinforcements of smaller size are symmetrically and continuously provided on both sides of the concave reinforcement with greater size along the roll width direction, and a plurality of convex and concave reinforcements of smaller size are also continuously provided at the bottom part of the concave reinforcement with greater size, and the dense, continuous and adjacent reinforcements provided on the surface of the front floor 1 can ensure sufficient plastic deformation during the forming process and control the occurrence of rebound, thereby ensuring that the open-drawing process can be successfully realized to ensure the quality of the product.

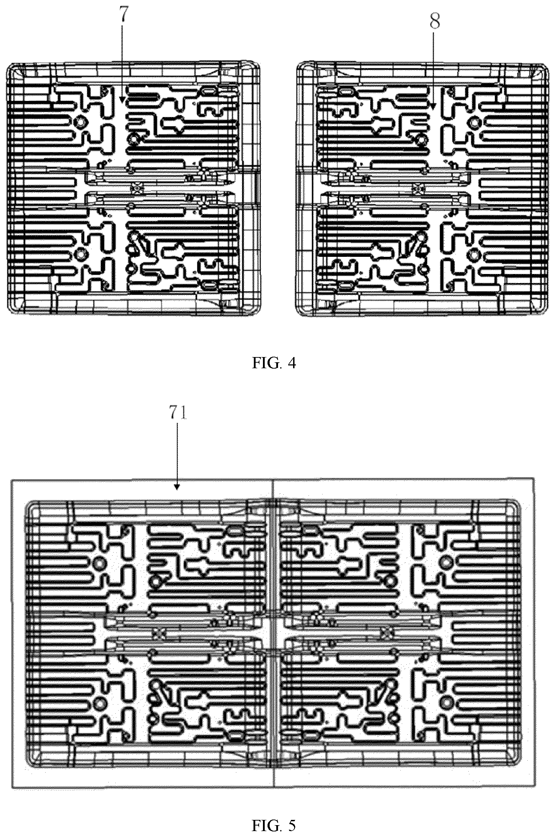

Please refer to FIG. 4, specifically, in the first embodiment of the present document, the mold is arranged using a dual-cavity process, and includes a first mold cavity 7 and a second mold cavity 8, the first mold cavity 7 and the second mold cavity 8 share common upper and lower bases, the first mold cavity 7 and the second mold cavity 8 are provided with a first convex mold and a second convex mold separated from each other for producing the front floor 1, respectively, and the first convex mold and the second convex mold are each provided with a head convex mold 3, tail convex mold 4, two locking ribs 2 and a plurality of positioning plates 6, the first mold cavity 7 and the second mold cavity 8 are used to produce two front floors 1 respectively using two rolls of blanks.

Referring more particularly to FIG. 5, in a second embodiment of the present document, the mold is arranged using one-mold-two-piece process and includes a third convex mold 71, the third convex mold 71 includes a first convex mold and a second convex mold integrated into one piece for producing the front floors 1, and the third convex mold 71 is used to produce two front floors 1 from one roll of blank. It is easy to understand that the molds in both the first embodiment and the second embodiment can save 50% of the punch charge, and effectively reduce the production cost.

Furthermore, the front floor 1 of the model with different wheelbases in the present document specifically includes a first front floor with a first predetermined length of wheelbase, a second front floor with a second predetermined length of wheelbase, and a third front floor with a third predetermined length of wheelbase, the first front floor, the second front floor, and the third front floor are capable of being drawn and flanging trimmed by one mold in the present document. When producing the front floors 1 of different lengths, the positions of the positioning plates 6 are different in the step direction. In this embodiment, the first predetermined length is greater than the third predetermined length and the second predetermined length, and the length of the conformal area of the first front floor is greater than the length of the conformal area of the third front floor, and the length of the conformal area of the second front floor. In the production of the first front floor, the positioning plate 6 positions the edge of the blank at a position close to the rear end of the conformal area, and in the production of the second front floor, the positioning plate 6 positions the edge of the blank at a position close to the front end of the conformal area. The drawing and flanging and trimming processes are first molded according to the first front floor with the longest wheelbase, the second front floor and the third front floor with shorter wheelbases are produced by the molds of the first front floor, saving the material required for four sets of large casting molds. The length of the first front floor is 1,258 mm, the length of the second front floor is 1,138 mm, and the length of the third front floor is 1,223 mm. Sharing of the mold in the present document for drawing and flanging trimming can increase the utilization rate of the open-drawing material by 3.15%, saving 0.4kg of raw material per vehicle, and at the same time saving an additional 0.3kg of raw material per vehicle by avoiding the waste of closed-drawing materials. In addition, the trimming and punching molds of the first front floor, the second front floor and the third front floor still need to be opened separately to adjust the uncoiling shear step to avoid material waste.

In summary, the mold of the present document capable of processing front floors with different wheelbases can use an open-drawing process to make the conformal area at the rear portion of the front floors while ensuring product quality and not wasting raw materials, so as to achieve the common use of the molds for the parts of the front floors which have different wheelbases but the same cross-sections of the conformal areas. The present document is also capable of producing the front floor by a dual-cavity process or a one-mold-two-piece process, which optimizes the investment in mold, material cost, the production cost and the development cycle, with excellent economic benefits.

The foregoing is only a specific embodiment of the present document, but the protection scope of the present document is not limited thereto, and any variations or substitutions easily made by the person skilled in the art within the scope of the technology disclosed in the present document shall be included in the protection scope of the present document. Therefore, the protection scope of the present document shall be subject to the protection scope of the claims.

## Claims

1. A mold capable of processing front floors having different wheelbases, **characterized in that** comprising a head convex mold (3) and a tail convex mold (4), the head convex mold (3) and the tail convex mold (4) being used to process front and rear portions of a front floor (1) in a step direction by an open-drawing process, respectively, and the mold further comprising a wheelbase variation area (1a) for adapting to a wheelbase change of the front floor (1), the wheelbase variation area (1a) being configured for producing the front floor (1) having same cross-sections at any positions in the step direction.

2. The mold capable of processing front floors having different wheelbases as claimed in claim **1,** wherein the mold capable of processing front floors having different wheelbases further comprises a plurality of locking ribs (2) for closed-drawing, the locking ribs (2) are provided on both sides of the mold capable of processing front floors having different wheelbases in the step direction.

3. The mold capable of processing front floors having different wheelbases as claimed in claim **2,** wherein the mold capable of processing front floors having different wheelbases further comprises a crimping ring (5) for controlling the inflow of material, initial positions of blanks on left and right sides of the front floor (1) are located on the crimping ring (5).

4. The mold capable of processing front floors having different wheelbases as claimed in claim **3,** wherein an initial position of the blank for the front portion of the front floor (1) is located on the head convex mold (3) and an initial position of the blank for the rear portion of the front floor (1) is located on the tail convex mold (4).

5. The mold capable of processing front floors having different wheelbases as claimed in claim **1,** wherein the mold comprises a reinforcement forming portion, the reinforcement forming portion is provided on the tail convex mold (4), the reinforcement forming portion is used to process a rear reinforcement (1b) at the rear portion of the front floor (1) that is successively arranged in a roll width direction.

6. The mold capable of processing front floors having different wheelbases as claimed in claim **5,** wherein the reinforcement forming portion comprises a reinforcement convex mold and a reinforcement concave mold that are adjacent and alternately arranged, the reinforcement convex mold and the reinforcement concave mold are used to make convex and concave reinforcements of the rear reinforcement (1b), the convex reinforcement and the concave reinforcement are connected through a curved surface.

7. The mold capable of processing front floors having different wheelbases as claimed in claim **1,** wherein the mold comprises a first mold cavity (7) and a second mold cavity (8), the first mold cavity (7) and the second mold cavity (8) sharing common upper and lower bases, the first mold cavity (7) and the second mold cavity (8) are respectively provided with a first convex mold and a second convex mold separated from each other for producing the front floor (1), the first mold cavity (7) and the second mold cavity (8) are used to produce two pieces of the front floors (1) respectively using two rolls of blanks.

8. The mold capable of processing front floors having different wheelbases as claimed in claim **1,** wherein the mold comprises a third convex mold (71), the third convex mold (71) comprising a first convex mold and a second convex mold integrated into one piece for producing the front floors (1), the third convex mold (71) is used for producing two pieces of the front floors (1) using a single roll of blank.

9. The mold capable of processing front floors having different wheelbases as claimed in claim **3,** wherein an outer side of the locking rib (2) is provided with a positioning plate (6) located on the crimping ring (5), the positioning plate (6) is able to move in the step direction along the extension direction of the locking rib (2) and is fixed to the crimping ring (5) when it moves to an arbitrary position, an edge of the blank is positioned within the wheelbase variation area (1a), the front floor (1) comprises a first front floor with a first predetermined length of wheelbase, a second front floor with a second predetermined length of wheelbase and a third front floor with a third predetermined length of wheelbase, the positioning plate (6) is positioned in different positions along the step direction when producing the front floors (1) of different wheelbases.

10. The mold capable of processing front floors having different wheelbases as claimed in claim **9,** wherein the first predetermined length is greater than the third predetermined length and the second predetermined length, the third predetermined length is greater than the second predetermined length, and the length of the conformal area of the first front floor is greater than the length of the conformal area of the third front floor and the length of the conformal area of the second front floor.
